# EUROPÄISCHE PATENTSCHRIFT

(11) **EP 2 096 424 B1**
(45) Veröffentlichungstag und Bekanntmachung des Hinweises auf die Patenterteilung: **10.07.2019**
(21) Anmeldenummer: 09152987.5
(22) Anmeldetag: 17.02.2009
(51) Int. Cl.: G01L 25/00

(54) **Betätigungsvorrichtung zum Prüfen von Drehmomentschlüsseln**
Actuating device for testing torque wrenches
Dispositif d'actionnement destiné à vérifier des clés dynamométriques

(30) Priorität: 29.02.2008 DE 202008002919 U
(43) Veröffentlichungstag der Anmeldung: 02.09.2009
(73) Patentinhaber: STAHLWILLE Eduard Wille GmbH & Co. KG, 42349 Wuppertal (DE)
(72) Erfinder: Schwafertz, Rainer, 42899, Remscheid (DE); Schmitt, Lothar, 42349, Wuppertal (DE)
(74) Vertreter: Willems, Volker

(56) Entgegenhaltungen:
- DE-U1-202006 018 352
- US-A- 5 181 425

## Beschreibung

### Technisches Gebiet

Betätigungsvorrichtung zum Prüfen von Drehmomentschlüsseln, enthaltend
a) einen Träger, zur Fixierung eines zu prüfenden Drehmomentschlüssels,
b) einen an dem Träger angeordneten Messwertaufnehmer, welcher mit dem Kopfstück des zu prüfenden Drehmomentschlüssels gekoppelt wird,
c) eine auf dem Träger angeordnete Griffhalterung zur Fixierung des Griffs des zu prüfenden Drehmomentschlüssels,
d) einen Auslenkmechanismus zum Erzeugen eines Drehmoments auf das Kopfstück des zu prüfenden Drehmomentschlüssels, und
e) einen Gleitmechanismus für ein reibungsarmes Gleiten des Griffs in der Griffhalterung, wobei
f) der Gleitmechanismus einen als Auflage ausgebildeten, schlittenartigen Gleitkörper aufweist, welcher auf einer Führungsfläche als Gleitführung geführt ist.

### Stand der Technik

Mit einem Drehmomentschlüssel kann ein vorgegebenes Drehmoment auf Verbindungselemente wie Schrauben oder Muttern ausgeübt werden. Dazu enthalten Drehmomentschlüssel einen Schlüsselhebel mit einem Griff und einen Schlüsselkopf, im Weiteren auch Kopfstück genannt. Oft ist am Schlüsselkopf eine als Vierkantzapfen ausgebildete Kupplung zur Werkzeugaufnahme vorgesehen. Auf den Vierkantzapfen können verschiedene Steckwerkzeuge zum Drehen von Schrauben oder Muttern gesteckt werden. Eine von einem Benutzer in Betätigungsrichtung am Griff aufgebrachte Kraft wird von dem Schlüsselhebel auf den Schlüsselkopf übertragen und erzeugt durch das Steckwerkzeug ein Drehmoment an einer Schraube oder Mutter. Zum Messen des aufgebrachten Drehmoments weist der Drehmomentschlüssel eine Messvorrichtung auf. Durch weitere Vorrichtungen kann das gemessene Drehmoment kontinuierlich angezeigt oder ein Erreichen eines vorgegebenen Drehmoments signalisiert werden.

Die Messvorrichtung des Drehmomentschlüssels unterliegt üblichen Verschleiß- und Ermüdungserscheinungen. Zur Kontrolle, ob ein von der Messvorrichtung gemessenes Drehmoment mit einem aufgebrachten Drehmoment übereinstimmt, muss der Drehmomentschlüssel von Zeit zu Zeit mit einer Betätigungsvorrichtung kalibriert und gegebenenfalls justiert werden. Dazu ist in der Betätigungsvorrichtung ein Träger mit einem Messwertaufhehmer und einer Griffhalterung vorgesehen. Das Kopfstück des Drehmomentschlüssels wird, beispielsweise mit dem Vierkantzapfen, fest mit dem Messwertaufhehmer gekoppelt. Der Griff des Drehmomentschlüssels wird durch die Griffhalterung fixiert.

Durch einen Auslenkmechanismus wird dann ein Drehmoment auf das Kopfstück des Drehmomentschlüssels erzeugt. Dieses Drehmoment wird von dem Messwertaufnehmer gemessen und mittels einer in der Betätigungsvorrichtung, z.B. am Messwertaufnehmer vorgesehenen Anzeige dargestellt. Das von dem Drehmomentschlüssel angezeigte Drehmoment oder ein dem Drehmomentschlüssel vorgegebenes Drehmoment für eine Auslösung ist so durch einen Vergleich mit dem auf der Anzeige dargestellten Drehmoment überprüfbar.

Bei den bekannten Betätigungsvorrichtungen zum Prüfen von Drehmomentschlüsseln werden verschiedene Auslenkmechanismen zur Erzeugung eines Drehmoments verwendet. Prinzipiell sind zur Erzeugung eines Drehmoments am Kopfstück des Drehmomentschlüssels zwei Varianten möglich. Entweder ist der Messwertaufnehmer drehbar an dem Träger befestigt und die Griffhalterung fest mit dem Träger verbunden, oder, umgekehrt, der Messwertaufnehmer ist fest mit dem Träger verbunden und die Griffhalterung ist beweglich am Träger montiert.

Betätigungsvorrichtungen mit einer gegenüber dem Träger beweglichen Griffhalterung enthalten einen Linearantrieb mit einer Spindel und einer Kurbel. Durch Drehen der Spindel mittels der Kurbel werden die Griffhalterung und damit auch der Griff des Drehmomentschlüssels rechtwinklig zum Träger ausgelenkt. Dadurch wird ein Drehmoment auf das am Messwertaufnehmer fixierten Kopfstück erzeugt. Der Drehmomentschlüssel wird dabei um die Achse des Messwertaufhehmers geschwenkt. Der Griff bewegt sich im Gegensatz zur linearen Bewegung der Griffhalterung kreisförmig und muss somit beweglich von der Griffhalterung gehalten werden.

Betätigungsvorrichtungen mit einem fest montierten Griffhalter auf einem statischen Träger besitzen einen drehbar am Träger befestigten Messwertaufnehmer mit einem Auslenkhebel oder einem Getriebe. Das Kopfstück des zu prüfenden Drehmomentschlüssels wird mittels einer Aufnahme des Messwertaufnehmers fest an diesem arretiert, während der Griff des Drehmomentschlüssels von dem Griffhalter gegengehalten wird. Durch Krafteinwirkung auf den Auslenkhebel oder der Drehbewegung des Getriebes wird ein Drehmoment über den Messwertaufnehmer auf das Kopfstück aufgebracht. Das aufgebrachte Drehmoment wird dabei von dem Messwertaufnehmer gemessen und zur Prüfung mit dem, vom Drehmomentschlüssel angezeigten oder am Drehmomentschlüssel vorgegebenen Drehmoment verglichen.

Die Griffhalter beider Arten von Betätigungsvorrichtungen haben Auflageflächen, die aus Stahl oder mit Kunststoff überzogenen sind. Die zu prüfenden Drehmomentschlüssel haben in der Regel Kunststoffgriffe und sind mit runden bzw. nahezu runden Griffen ausgestattet. Bei einer Messung wird der Griff im Griffhalter horizontal ausgelenkt. Dabei treten starke Reibungen der Griffoberfläche mit der Auflagefläche auf, da ein Teil des aufgebrachten Drehmomentes in die Überwindung der Reibung zwischen Griff und Auflage geht. Dies führt zu ruckartigen Bewegungen bei der Auslenkung der Drehmomentschlüssel und bedingt fehlerhafte Messergebnisse. Insbesondere bei sehr kleinen Prüfdrehmomenten treten starke Verfälschungen der Messwerte auf, die schon außerhalb des Toleranzbereiches liegen.

Die bekannten Auflagevorrichtungen für Drehmomentgriffe haben den Nachteil, dass sie bei einer Messung den Griff nicht reibungsarm bewegen können, sondern durch abrupte Bewegungen der Drehmomentgriffe das Ergebnis der Messung verfälschen. Dies tritt vor allem bei Drehmomentschlüsseln mit leichten Griffen auf, da diese besonders anfällig für kleinste Reibungen auf der Auflagefläche während der Messung sind. Auch Drehmomentschlüssel mit weichen Griffen bzw. Griffen aus zwei Komponenten beispielsweise aus verschiedenen Kunstoffen, verursachen diese unerwünschten und abrupten Bewegungen in der Griffhalterung.

Die deutsche Gebrauchsmusterschrift DE 20 2006 018 352 U1 offenbart eine Betätigungsvorrichtung zum Prüfen von Drehmomentschlüsseln mit einer Griffhalterung zum Fixieren des Griffs des zu prüfenden Drehmomentschlüssels. Die Griffhalterung enthält zwei u-förmig angeordnete Zapfen oder einen wechselbaren Zapfen. Auf wenigstens einem der Zapfen ist eine verschiebbare und drehbar gelagerte Hülse angeordnet, die am unteren Ende eine tellerförmige Auflagefläche zum senkrechten Halten des Griffs enthält. Mittels einer Büchse, z.B. einer Kugelbüchse, ist die Hülse mit geringer Reibung auf dem Zapfen verschiebbar.

In der US 5,181,425 wird eine Prüfvorrichtung für spezielle, mechanisch anzeigende Drehmomentschlüssel mit einem am Schlüsselkopf befestigten Zeiger, einer beim Griff angeordneten Skale, einem sich bei einer Betätigung biegenden Schlüsselarm und einem schwenkbar am Schlüsselarm gelagerten Griff beschrieben. Die Prüfvonichtung enthält eine Griffhalterung mit zwei u-förmig angeordneten Zapfen. Auf beiden Zapfen ist jeweils eine drehbare, keilförmige Stütze vorgesehen. Die zueinander zeigenden, schmalen Seiten der Stützen enthalten jeweils eine Nut zur Aufnahme einer elastischen Platte. Eine der Platten ist L-förmig ausgebildet, um den Griff von unten zu stützen. Der vertikale Arm der L-förmigen Platte lässt sich in der Nut zur Höheneinstellung verschieben und mit einer Klemmschraube fixieren.

### Offenbarung der Erfindung

Aufgabe der Erfindung ist es daher, die genannten Nachteile des Standes der Technik zu vermeiden und ein kostengünstiges, sowie genaues Prüfen der Drehmomentschlüssel zu erreichen.

Erfindungsgemäß wird die Aufgabe dadurch gelöst, dass bei einer Betätigungsvorrichtung zum Prüfen von Drehmomentschlüsseln der eingangs genannten Art
g) ein horizontaler Gleitmechanismus für ein reibungsarmes horizontales Gleiten des Griffs in der Griffhalterung und
h) ein vertikaler Gleitmechanismus für ein reibungsarmes vertikales Gleiten des Griffs in der Griffhalterung vorgesehen sind.

Durch diese Erfindung können Kalibrierungen von Drehmomentschlüsseln exakt durchgeführt werden. Durch den neuen Gleitmechanismus sind die Auflageflächen für den Griff des Drehmomentschlüssels in bzw. auf der Griffhalterung so ausgestattet, dass bei Messungen des Drehmomentes keine störenden Reibungen auftreten. Ein in die Betätigungsvorrichtung eingesetzter Drehmomentschlüssel ist, wenn sich der Griff in der Griffhalterung bewegt, bezüglich auftretender Reibungskräfte, weitestgehend kraftneutral. Zumindest sind die Kräfte kalkulier- bzw. erfassbar, so dass dieser Einfluss von einem Messergebnis des Drehmomentschlüssels eliminiert werden kann. Die Griffhalterung für den Griff des Drehmomentschlüssels hat eine horizontale Auflagefläche und einen vertikalen Anschlag. Zu Beginn der Messung wird der Griff in Richtung des vertikalen Anschlags geführt. Dabei können durch Reibung bei bisher bekannten Betätigungsvorrichtungen ruckende Bewegungen des Griffes auftreten, die das Prüfergebnis beeinflussen. Durch sporadisches Auftreten dieser ruckenden Bewegung lässt sich dieser Einfluss nicht ohne weiteres aus dem Prüfergebnis beseitigen. Dieser Einfluss wird nun durch den erfindungsgemäßen Gleitmechanismus weitestgehend vermieden. Die Reibungskräfte, die auf den Griff wirken, sind durch den neuen Mechanismus nahezu ausgeschaltet oder wenigstens als berechenbare Größe eliminierbar. Dadurch können auch kleinste Prüfdrehmomente, insbesondere von leichten Drehmomentschlüsseln, exakt kalibriert werden. Messungen bei leichten Drehmomentschlüsseln lagen bisher oft außerhalb des Toleranzbereiches. Durch die vorliegende Erfindung kann nun die Kalibrierung der Drehmomentschlüssel reproduzierbar durchgeführt werden, da keine störenden und spontan auftretenden Reibungskräfte auf die Griffe des Drehmomentschlüssels einwirken. Es versteht sich von selbst, dass solche Betätigungsvorrichtungen in ihrer Ausrichtung auch gedreht, beispielsweise um 90°, verwendet werden können.

Bei den bekannten Betätigungsvorrichtungen zum Prüfen von Drehmomentschlüsseln werden verschiedene Auslenkmechanismen zur Erzeugung eines Drehmoments verwendet. Prinzipiell sind zur Erzeugung eines Drehmoments am Kopfstück eines Drehmomentschlüssels zwei Varianten möglich. Entweder ist der Messwertaufnehmer drehbar an dem Träger befestigt und die Griffhalterung fest mit dem Träger verbunden oder, umgekehrt, der Messwertaufnehmer ist fest mit dem Träger verbunden und die Griffhalterung ist beweglich am Träger vorgesehen. Beide Arten von Betätigungsvorrichtungen können nun mit dem erfindungsgemäßen Gleitmechanismus ausgestattet werden. Die bei den Messungen auftretenden ruckenden Bewegungen entfallen bei beiden Varianten mit dem neuartigem Gleitmechanismus, so dass auch kleinste Prüfdrehmomente sicher und genau geprüft werden können.

Eine vorteilhafte Ausgestaltung der Erfindung besteht darin, einen horizontalen Gleitmechanismus für ein reibungsfreies horizontales Gleiten des Griffs bis zum Anschlag in der Griffhalterung zu erreichen. Bei den Betätigungsvorrichtungen liegen die Griffe der Drehmomentschlüssel auf einer horizontalen Auflage. Zur exakten Prüfung eines Drehmomentschlüssels muss dieser horizontal betätigt werden. Durch den horizontalen Gleitmechanismus sind Einflüsse der Gewichtskraft oder des Werkstoffs für den Griff auszuschließen, insbesondere bei leichten und kleinen Drehmomentschlüsseln während eines Prüfvorgangs. Der horizontale Gleitmechanismus verhindert ein seitliches, in Richtung des Anschlags auftretendes Ruckeln, wenn ein Drehmoment auf den Drehmomentschlüssel wirkt. Durch diese Maßnahme ist ein exaktes Messen des Drehmoments möglich.

Während des Messvorgangs treten zwischen Griff und Anschlag in der Griffhalterung auch vertikale Kräfte auf. Diese vertikalen Kräfte können den Messvorgang ebenfalls beeinträchtigen. Eine vorteilhafte Ausbildung der Erfindung ist daher, einen vertikalen Gleitmechanismus für ein reibungsfreies vertikales Gleiten des Griffs der Drehmomentschlüssel in der Griffhalterung bzw. dem Anschlag vorzunehmen. Bei den Betätigungsvorrichtungen kommen die Griffe während der Messung in Kontakt mit dem vertikalen Anschlag der Griffhalterung. Dabei treten Querkräfte auf, die eine exakte Messung beeinflussen. Diese werden beispielsweise aufgrund von elastischen Kunststoffgriffhüllen der Drehmomentschlüssel verursacht. Durch den vertikalen Gleitmechanismus an den Anschlägen werden solche Kräfte reduziert und die Messung der Drehmomentschlüssel kann in Hinblick auf die Reibung fehlerfrei durchgeführt werden. Der vertikale Gleitmechanismus unterstützt zudem die Verwendung von Drehmomentschlüsseln mit unterschiedlicher Griffstärke, um diese reibungslos zu kalibrieren.

Vorteilhaft ist, dass in einer Ausgestaltung der Erfindung der Gleitmechanismus einen als Auflage ausgebildeten Gleitkörper aufweist, welcher auf oder in einer Gleitführung geführt ist. Alle zu prüfende Drehmomentschlüssel liegen mit ihrem Griff auf dem Gleitkörper. Der Gleitkörper bewegt sich auf oder in der Gleitführung mit derselben Reibung. Jede Messung ist daher innerhalb des Toleranzbereichs gleich durchzuführen. Diese erfindungsgemäße Maßnahme ermöglicht es, Drehmomentmessungen mit Drehmomentschlüsseln reproduzierbar durchzuführen.

In einer weiteren vorteilhaften Ausbildung der Erfindung enthält der Gleitmechanismus eine Kugel- bzw. Rollenlagerung, die ein Gleiten mit vernachlässigbarer Reibung des Drehmomentgriffes während der Messung gewährleistet. Durch den Gleitmechanismus mit Kugel- bzw. Rollenlagerung bewegt sich der Griff des Drehmomentschlüssels während der Messung gleichmäßig und ohne Reibung in der Betätigungsvorrichtung. Das Gleiten des Drehmomentschlüssels erfolgt unmittelbar oder mittelbar über die Kugel- bzw. Rollenlagerung. Bei der unmittelbaren Kugel- bzw. Rollenlagerung dienen diese als Auf- bzw. Anlagefläche für den Griff, der darüber gleitet. Bei der mittelbaren Lagerung gleitet beispielsweise ein als Auf- bzw. Anlagefläche ausgebildeter Gleitkörper unter Ausnutzung der Kugel- bzw. Rollenlagerung über den entsprechenden Halterungsbereich. Durch das nahezu reibungslose Bewegen der Kugel- bzw. Rollenlagerung ist es in dieser vorteilhaften Ausgestaltung besonders einfach Drehmomentschlüssel exakt und schnell zu kalibrieren.

In einer zweckmäßigen Ausgestaltung ist der Gleitkörper hülsenartig ausgebildet und umschließt einen als Gleitführung ausgebildeten Stift. Die Hülse bildet für den Griff des Drehmomentschlüssels die Auflage- bzw. ggf. die Anlagefläche. Diese Hülse bewegt sich immer mit der gleichen Reibung auf dem Stift. Dadurch werden Reibungskräfte am Messwertaufnehmer während eines Prüfvorgangs konstant gehalten. Mit Hilfe der Hülse werden Messfehler, verursacht durch ruckende Bewegung des Griffs auf einer starren Auflagefläche, weitestgehend kompensiert. Dazu gleitet die dafür ausgelegte Hülse auf dem Stift. Die Hülse kann so ausgebildet sein, dass sie auf dem Stift mit Kugeln oder Rollen gelagert ist. Die Prüfung eines Drehmomentschlüssels wird durch diese Ausgestaltung optimiert.

Eine zweckmäßige Ausgestaltung der Erfindung ist ein schlittenartig ausgebildeter Gleitkörper, wobei die Gleitführung von einer entsprechenden Führungsfläche gebildet wird. Diese Ausgestaltung kann als eine Alternative zu der Hülse gesehen werden. Jedoch lassen sich die beiden genannten Ausführungsformen auch in Kombination verwenden. Der als Schlitten ausgebildeter Gleitkörper hat den Vorteil, dass Messungen von Drehmomentschlüsseln schnell und unkompliziert durchgeführt werden können. Während der Messung liegen die Drehmomentschlüssel auf dem schlittenartigen Gleitkörper, der sich wiederum nahezu reibungslos auf einer Führungsfläche bewegt. Der schlittenartige Gleitkörper ist einfach in der Herstellung. Damit können ggf. auch herkömmliche Betätigungsvorrichtungen nachgerüstet werden. Die Nachrüstung kann in kurzer Zeit mit minimalem Aufwand durchgeführt werden. Durch das Gleiten des Schlittens in bzw. auf der Führungsfläche ist diese Art der Ausgestaltung besonders wartungsarm und die Prüfung der Drehmomentschlüssel kann optimal durchgeführt werden. Der schlittenartige Gleitkörper kann beispielsweise Rollen oder Kugeln aufweisen, mit denen er reibungsarm bewegbar ist.

In einer weiteren vorteilhaften Ausgestaltung weist der Auslenkmechanismus eine Vorrichtung zum Auslenken des Drehmomentschlüssels auf. Durch diese Maßnahme wird ein in die Betätigungsvorrichtungen eingesetzter und zu prüfender Drehmomentschlüssel betätigt. Ein Drehmoment wird am Kopfstück erzeugt, welches mit einem Messwertaufnehmer der Betätigungsvorrichtung erfasst wird. Der Drehmomentschlüssel wird dabei um die Achse am Kopfstück geschwenkt. In zahlreichen Betätigungsvorrichtungen bewegt sich der Griff des Drehmomentschlüssels kreisförmig, während im Gegensatz dazu die Griffhalterung eine lineare Bewegung vollzieht. Wegen der unterschiedlichen Bewegungsarten muss der Griff daher lose und beweglich in der Griffhalterung gehalten werden. Durch den Gleitmechanismus kann die Bewegung der Drehmomentgriffe um den fixierten Drehmomentkopf besonders reibungsarm durchgeführt werden. Auftretende Querkräfte, die das Messergebnis verfälschen würden, sind durch den Gleitmechanismus weitestgehend ausgeschlossen und die erhaltenen Messergebnisse sind exakt und reproduzierbar.

In einer weiteren vorteilhaften Ausführung ist der Auslenkmechanismus als Auslenkhebel ausgebildet und wirkt auf das Kopfstück des zu prüfenden Drehmomentschlüssels, wobei der Träger gegenüber dem Auslenkhebel statisch vorgesehen ist. Das Kopfstück des zu prüfenden Drehmomentschlüssels wird mittels einer Aufnahme des Messwertaufnehmers fest an diesem arretiert, während der Griff des Drehmomentschlüssels von dem Griffhalter gegengehalten wird. Durch Krafteinwirkung auf den Auslenkhebel wird ein Drehmoment über den Messwertaufhehmer auf das Kopfstück aufgebracht. Das aufgebrachte Drehmoment wird dabei von dem Messwertaufnehmer gemessen und zur Prüfung mit dem, vom Drehmomentschlüssel angezeigten oder am Drehmomentschlüssel vorgegebenen Drehmoment verglichen.

Da der Griffhalter bei einem Prüfvorgang nicht bewegt wird, verändert sich der Kraftangriffspunkt bzw. Gegenhaltepunkt am Griff während der gesamten Prüfung nicht. Somit ist eine Messung mit gleichbleibender Hebelarmlänge möglich. Weiterhin wird durch die Verwendung eines Auslenkhebels kein Getriebe oder kein Mechanismus zum Schwenken des kompletten Trägers benötigt. Ein Aufbau der Betätigungsvorrichtung zum Prüfen von Drehmomentschlüsseln ist mit wenigen Einzelteilen kompakt und flach ausführbar. Wegen der wenigen Einzelteile ist der Aufbau ferner preiswert herstellbar und weniger störanfällig.

Durch den erfindungsgemäßen Gleitmechanismus ist es nun möglich, Drehmomentmessungen bei solchen Betätigungsvorrichtungen reibungslos durchzuführen, bei denen der Drehmomentschlüssel fest mit dem Träger verbunden ist. Die dabei auftretende Reibung zwischen dem Griff des Drehmomentschlüssels und der Auflagefläche der Griffhalterung wird durch den Gleitmechanismus nahezu vermieden. Die bisher auftretenden ruckenden Bewegungen der Drehmomentsschlüssel während der Messung werden bei solchen Betätigungsvorrichtungen wirksam verhindert, so dass die Messergebnisse exakt und reproduzierbar sind.

Als vorteilhafte Ausgestaltung enthält die Betätigungsvorrichtung eine Spindelvorrichtung, welche an dem Träger angeordnet ist, wobei ein auf einer Spindel der Spindelvorrichtung angeordneter Mitnehmer bei Betätigung der drehbar gelagerten Spindel den Auslenkhebel oder den Drehmomentschlüssel auslenkt. Dabei lenkt ein auf der Spindel der Spindelvorrichtung angeordneter Mitnehmer bei Betätigung der drehbar gelagerten Spindel den Auslenkhebel aus. Durch die Untersetzung der Kurbel und der Spindel sind ein gleichmäßiges Anziehen und eine Feindosierung des Drehmoments unter minimalem Kraftaufwand des Benutzers möglich. Durch eine Verwendung von wenigen beweglichen Teilen ist die Betätigungsvorrichtung sehr flach und kompakt realisierbar. Sie beansprucht wenig Arbeitsplatz und ist wegen der geringen Anzahl von beweglichen Einzelteilen auch weniger störanfällig bzw. wartungsbedürftig.

Die Spindel der Spindelvorrichtung ist in einer vorteilhaften Ausgestaltung der Betätigungsvorrichtung über einen Motor, wie beispielsweise einen Elektromotor, antreibbar ausgebildet. Der Einsatz des Motors befreit den Benutzer von der Bedienung einer Kurbel und beugt so einer Ermüdung des Benutzers vor. Der Benutzer kann sich besser auf einen Prüfvorgang konzentrieren. Es werden Messfehler durch eine Unachtsamkeit des Benutzers, wie beispielsweise unterschiedliche Anzugsgeschwindigkeiten, vermieden. Durch eine geeignete Ansteuerung des Motors lassen sich Messvorgänge einfach automatisieren.

Gemäß einer weiteren vorteilhaften Ausgestaltung ist an der Betätigungsvorrichtung auf dem Träger in Längsrichtung des zu fixierenden Drehmomentschlüssels eine verstellbar angeordnete Griffhalterung vorgesehen. Dadurch ist die Griffhalterung auf verschiedene Drehmomentschlüssel unterschiedlicher Länge einstellbar. Die Betätigungsvorrichtung lässt sich ohne großen Aufwand an verschieden lange Drehmomentschlüssel anpassen. Dabei wird gewährleistet, dass sich ein Kraftangriffspunkt bzw. Gegenhaltepunkt immer in der Mitte des Griffs befindet.

In einer weiteren vorteilhaften Ausgestaltung ist eine Signalverarbeitungseinrichtung vorgesehen, welche die Messsignale des Messwertaufnehmers verarbeitet, insbesondere digitalisiert, in einem Speicher speichert und auf einer Anzeige anzeigt. Eine Verarbeitung der Messsignale ermöglicht beispielsweise eine Berücksichtigung von systematischen Messfehlern während einer Prüfung. Dabei können digitalisierte Messwerte einfacher weiterverarbeitet, angezeigt und gespeichert werden. Durch eine kontinuierliche Darstellung von aufgebrachten Drehmomenten mittels einer Anzeige wird eine Feindosierung eines Drehmoments zur präzisen Prüfung eines Drehmomentschlüssels für einen Benutzer durchführbar. Das Speichern von gemessen Drehmomentwerten erleichtert dem Benutzer eine Protokollierung eines Prüfvorgangs und ermöglicht eine Archivierung von Prüfvorgängen mit des am Kopfstück eines Drehmomentschlüssels aufgebrachten Drehmomenten. Auslösende Drehmomentschlüssel sind durch eine Speicherung des maximal aufgebrachten Drehmoments vor einer Auslösung besser prüfbar.

Als vorteilhafte Ausbildung der Erfindung hat sich ferner erwiesen, wenn der Träger verlängerbar ausgebildet ist. Die Betätigungsvorrichtung eignet sich durch einen verlängerten Träger auch zum Prüfen von sehr langen Drehmomentschlüsseln. Bei einem Prüfen von kleinen Drehmomentschlüsseln lässt sich die Vorrichtung entsprechend raumsparend einrichten und beansprucht weniger Arbeitsplatz. Ferner wird ein Transport der Betätigungsvorrichtung durch eine entsprechende Verkürzung des Trägers und der damit einhergehenden Platzersparnis erleichtert.

Weitere Ausgestaltungen und Vorteile ergeben sich aus dem Gegenstand der Unteransprüche, sowie den Zeichnungen mit den dazugehörigen Beschreibungen.

### Kurze Beschreibung der Zeichnungen

- Fig. 1: zeigt in einer schematischen Prinzipskizze ein Ausführungsbeispiel einer Betätigungseinrichtung mit Auslenkhebel zum Prüfen von Drehmomentschlüsseln.
- Fig. 2: zeigt in einer schematischen Prinzipskizze ein Ausführungsbeispiel einer Betätigungseinrichtung mit beweglicher Führungsschiene zum Prüfen von Drehmomentschlüsseln.
- Fig. 3: zeigt eine Detailansicht einer Griffhalterung nach bekannter Art.
- Fig. 4: zeigt eine Detailansicht einer Griffhalterung mit einem erfindungsgemäßen Gleitmechanismus.
- Fig. 5: zeigt eine Detailansicht einer Griffhalterung während des Messvorgangs.
- Fig. 5a: zeigt eine zweite Detailansicht einer Griffhalterung während des Messvorgangs.
- Fig. 5b: zeigt eine dritte Detailansicht einer Griffhalterung während des Messvorgangs.
- Fig. 6: zeigt einer Detailansicht einer Griffhalterung mit Gleitmechanismus in Form einer Kugel- bzw. Rollenlagerung.
- Fig. 7: zeigt eine Detailansicht einer Griffhalterung mit Gleitmechanismus in Form einer Hülse.
- Fig. 8: zeigt eine Detailansicht einer Griffhalterung mit Gleitmechanismus in Form eines Schlittens.

### Bevorzugte Ausführungsbeispiele

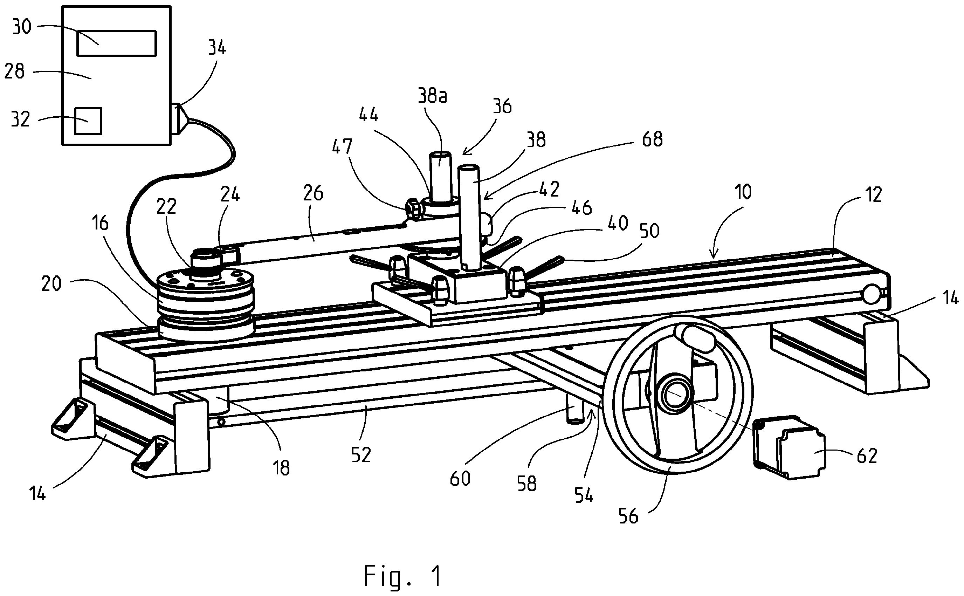

Fig. 1 zeigt ein erstes Ausführungsbeispiel einer Betätigungsvorrichtung 10 zum Prüfen von Drehmomentschlüsseln 26, mit einem Auslenkmechanismus, der als Auslenkhebel 52 eine Kraft auf ein Kopfstück 24 des Drehmomentschlüssels 26 ausübt. Eine fest mit einem Träger 12 verbundene Griffhalterung 36 ist mit einem erfindungsgemäßen Gleitmechanismus 68 ausgestattet.

Die Betätigungsvorrichtung 10 enthält den Träger 12 mit zwei - gegebenenfalls in der Höhe verstellbaren - Standfüßen 14. Diese gewährleisten einen sicheren und horizontalen Stand der Betätigungsvorrichtung 10 und können gegebenenfalls mit einer Unterlage verschraubt werden. Auf dem Träger 12 ist ein Messwertaufnehmer 16 drehbar montiert. Dazu weist der Messwertaufnehmer 16 einen Drehzapfen 18 auf, welcher durch eine Ausnehmung des Trägers 12 geführt ist und mit einer Lagerung 20 drehbar am Träger 12 gehalten wird. Weiterhin ist an dem Messwertaufnehmer 16 eine Aufnahme 22 vorgesehen. Durch die Aufnahme 22 wird das Kopfstück 24 des Drehmomentschlüssels 26 über einen Vierkantzapfen fest mit dem Messwertaufnehmer 16 gekoppelt. Alternativ sind auch Aufnahmen 22 für andere, am Kopfstück 24 befestigte Werkzeuge wählbar. Die am Träger 12 fest installierte Griffhalterung 36 besitzt zwei Zapfen 38, 38a, die über eine Brücke 40 u-förmig angeordnet sind. Je nach zu prüfender Drehrichtung dient einer der Zapfen 38 oder 38a als Anschlag für einen Griff 42 des Drehmomentschlüssels 26.

In einer alternativen Ausführung enthält die Griffhalterung 36 einen wechselbare Zapfen 38 und die Brücke 40 zwei Aufnahmen für den Zapfen 38. Je nach Drehrichtung wird der wechselbare Zapfen 38 in die entsprechende Aufnahme geführt und hält den Griff 42 als Anschlag gegen. Eine Hülse 44 umgibt den Zapfen 38. Diese Hülse 44 gleitet auf dem Zapfen 44. Dies bildet den vertikalen Teil des Gleitmechanismus 68, um vertikale Querkräfte zwischen Griff 42 und Zapfen 38, 38a zu verringern. Der horizontale Gleitmechanismus 68 befindet sich zwischen den Zapfen 38, 38a, um horizontale Reibung zu vermeiden. Der Gleitmechanismus 68 kann dabei in verschiedenen Ausführungen verwendet werden: Als Kugel- oder Rolllagerung 80, als gleitende Hülse 82 oder beispielsweise in Form einer Führungsschiene 70 ausgebildet sein.

Die Brücke 40 wird mit lösbaren Arretiermitteln 50, wie beispielsweise von Hand bedienbaren Klemmhebeln, an dem Träger 12 arretiert. Durch Lösen der Arretiermittel 50 kann die gesamte Griffhalterung 36 auf dem Träger 12 verschoben und so an die Länge eines Drehmomentschlüssels 26 angepasst werden. Der Träger 12 ist verlängerbar ausgebildet, um bei Bedarf auch sehr lange Drehmomentschlüssel 26 mit der Betätigungsvorrichtung 10 prüfen zu können.

An dem unten am Träger 10 herausragenden Drehzapfen 18 ist zum Erzeugen eines Drehmoments ein Ende des Auslenkhebel 52 befestigt. Durch Auslenken des Auslenkhebels 52 wird über den Drehzapfen 18 und den Messwertaufnehmer 16 ein Drehmoment auf das Kopfstück 24 des Drehmomentschlüssels 26 aufgebracht. Zum Auslenken des Auslenkhebels 52 ist eine Spindelvorrichtung 54 am Träger 12 angeordnet. Mit einer Kurbel 56 wird durch einen Benutzer eine drehbar gelagerte Spindel 58 getätigt. Die Spindel 58 treibt einen Mitnehmer 60 an, welcher beweglich mit dem anderen Ende des Auslenkhebels 52 verbunden ist und diesen auslenkt. Dazu verfügt der Mitnehmer 60 z.B. über einen Zapfen in einem Langloch des Auslenkhebels 52 oder über zwei Zapfen, zwischen denen das Ende des Auslenkhebels 52 gelagert ist.

Statt der Spindelvorrichtung 54 können auch andere Linearantriebe zur Betätigung des Auslenkhebels 52 vorgesehen werden. In einer weiteren Ausführung der Betätigungsvorrichtung 10 wird statt der Kurbel 56 zur manuellen Bedienung der Spindelvorrichtung 54 ein Motor 62, beispielsweise ein Elektromotor, verwendet.

Die vom Messwertaufnehmer 16 gemessenen Drehmomente werden an eine Signalverarbeitungseinrichtung 28 übertragen und dort verarbeitet und digitalisiert. Anschließend werden die gemessenen Drehmomente mit einer Anzeige 30 dargestellt und in einem Speicher 32 zur Protokollierung und Archivierung gespeichert. Über eine Schnittstelle 34 können gemessene Drehmomente an externe Geräte zu weiteren Verarbeitung übermittelt werden.

Zum Prüfen des Drehmomentschlüssels 26 mit der Betätigungsvorrichtung 10 wird zunächst je nach zu prüfender Drehrichtung eine Hülse 44, die mit dem Gleitmechanismus 68 angestattet ist, auf den entsprechenden Zapfen 38 bzw. 38a geschoben. Dann wird das Kopfstück 24 des Drehmomentschlüssels 26 an die Aufnahme 22 des Messwertaufnehmers 16 gekoppelt. Nach Lösen der Arretiermittel 50 wird die Griffhalterung 36 so auf dem Träger 12 verschoben und anschließend wieder arretiert, dass der Zapfen 38a mit der Hülse 44 den Griff 42 des Drehmomentschlüssels 26 in der Mitte gegen hält. Dabei kommt der Griff 42 des Drehmomentschlüssels 26 auf dem Gleitmechanismus 68 zum Liegen. Die Hülse 44, die mit dem Gleitmechanismus 68 ausgerüstet ist, wird durch Aufbringen eines geringen Drehmoments in der Höhe ausgerichtet und mit einer Klemmschraube 47 fixiert, so dass eine Auflagefläche 46, bestückt mit dem reibungslosen Gleitmechanismus 68, den Griff 42 von unten stützt und senkrecht zur Achse des Messwertaufnehmers 16 hält.

Nach diesen Vorbereitungen erfolgt die eigentliche Prüfung des Drehmomentschlüssels 26. Durch Betätigen der Kurbel 56 oder des Motors 62 bringt der Benutzer über die Spindelvorrichtung 54, den Auslenkhebel 52, den Drehzapfen 18 und den Messwertaufnehmer 16 ein gleichmäßig vergrößerbares und feindosierbares Drehmoment an dem Kopfstück 24 des Drehmomentschlüssel 26 auf. Durch die Kraft des Drehmomentes gleitet der Drehmomentschlüssels 26 reibungslos über den Gleitmechanismus 68 und kommt in vertikalen Kontakt mit dem Zapfen 38. Die sonst dabei auftretenden Querkräfte, werden durch den vertikalen Gleitmechanismus 68, welcher z.B. durch die Hülsen 44 gebildet wird, aufgehoben. Das aufgebrachte Drehmoment wird von dem Messwertaufnehmer 16 gemessen und nach einer Verarbeitung durch die Signalverarbeitungseinrichtung 28 auf der Anzeige 30 dargestellt.

Der Benutzer kann jederzeit das aufgebrachte Drehmoment mit dem von dem Drehmomentschlüssel 26 angezeigten Drehmoment vergleichen und gegebenenfalls im Speicher 32 speichern. Für auslösende Drehmomentschlüssel 26 wird das maximal aufgebrachte Drehmoment automatisch im Speicher 32 gespeichert. Das erleichtert einen Vergleich des am Drehmomentschlüssel 26 vorgegebenen Drehmoments mit dem aufgebrachten Drehmoment bei einer Auslösung.

Anschließend wird der Drehmomentschlüssel 26 justiert und die Prüfung so oft wiederholt, bis eine Übereinstimmung der Drehmomentwerte in festgelegten Toleranzgrenzen erreicht ist. Für einen Ausdruck oder eine Archivierung eines Prüfprotokolls können die im Speicher 32 gespeicherten Drehmomentwerte über die Schnittstelle 34 an externe Geräte, beispielsweise einen Drucker, übertragen werden.

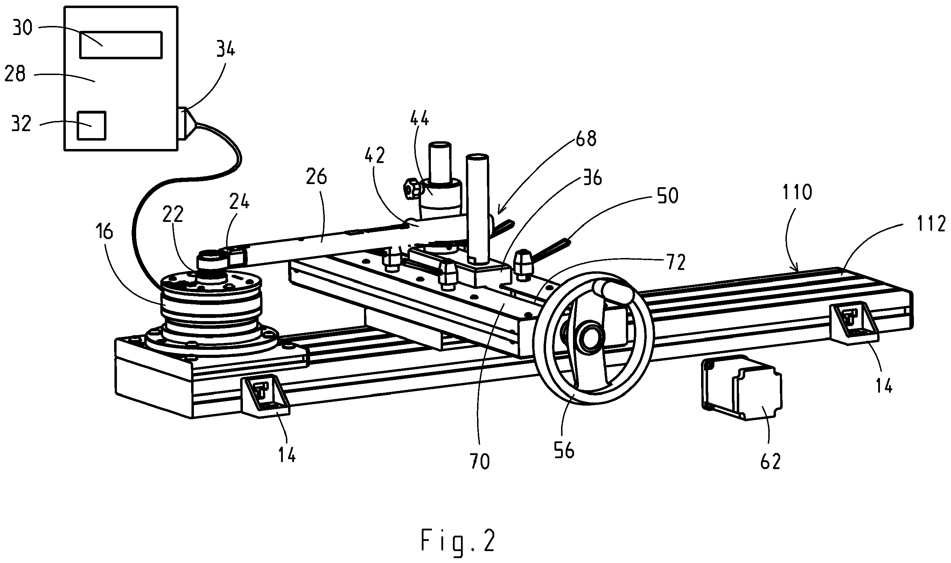

Fig. 2 zeigt ein weiteres Ausführungsbeispiel einer Betätigungsvorrichtung 110 zum Prüfen von Drehmomentschlüsseln 26. Im Unterschied zu Fig. 1 besteht der Auslenkmechanismus aus einer Führungsschiene 70 mit beweglicher Griffhalterung 36. Die Kraft des aufgebrachten Drehmoments bewegt den Griff 42 des Drehmomentschlüssels 26 innerhalb einer Führungsschiene 70 in seitlicher Richtung zum Träger 112. Das Kopfstück 24 des Drehmomentsschlüssels 26 befindet sich dabei im Messwertaufnehmer 16, der seinerseits mit dem Träger 112 fest verbunden ist. Der Gleitmechanismus 68 befindet sich an der Griffhalterung 36 in horizontaler und vertikaler Ausrichtung.

Die Betätigungsvorrichtung 110 enthält den Träger 112 mit zwei - gegebenenfalls in der Höhe verstellbaren - Standfüßen 14. Diese gewährleisten einen sicheren und horizontalen Stand der Betätigungsvorrichtung 110 und können gegebenenfalls mit einer Unterlage verschraubt werden. Auf dem Träger 112 befindet sich die Führungsschiene 70, die mit einer Rinne 72 versehen ist, in der sich die freibewegliche Griffhalterung 36 befindet. In der Griffhalterung 36 ist der Gleitmechanismus 68 in horizontaler und vertikaler Richtung angebracht. Weiterhin ist am Träger 112 der Messwertaufnehmer 16 fest installiert, der durch die Aufnahme 22 den Kopf des Drehmomentschlüssels 26 über einen Vierkantzapfen fest mit dem Messwertaufhehmer 16 verbindet.

Die Führungsschiene 70 wird mit lösbaren Arretiermitteln 50, wie beispielsweise von Hand bedienbaren Klemmhebeln, an dem Träger 112 arretiert. Durch Lösen der Arretiermittel 50 kann die Führungsschiene 70 auf dem Träger 112 verschoben und so an die Größe des Drehmomentschlüssels 26 angepasst werden. Der Träger 112 ist verlängerbar ausgebildet, um bei Bedarf auch sehr lange Drehmomentschlüssel 26 mit der Betätigungsvorrichtung 110 prüfen zu können.

Vom Messwertaufhehmer 16 gemessene Drehmomentwerte werden an die Signalverarbeitungseinrichtung 28 übertragen, dort verarbeitet und digitalisiert. Anschließend werden die gemessenen Drehmomentwerte mit der Anzeige 30 dargestellt und in dem Speicher 32 zur Protokollierung und Archivierung gespeichert. Über die Schnittstelle 34 können gemessene Drehmomentwerte an externe Geräte zur weiteren Verarbeitung übermittelt werden.

Zum Prüfen des Drehmomentschlüssels 26 mit der Betätigungsvorrichtung 110 wird zunächst das Kopfstück 24 des Drehmomentschlüssels 26 in die Aufnahme 22 des Messwertaufhehmers 16 verankert. Je nach Länge des Drehmomentschlüssels 26 wird die Führungsschiene 70 auf dem Träger 112 bewegt und der Griff 42 des Drehmomentschlüssels 26 wird locker in der Griffhalterung 36 zwischen dem Gleitmechanismus 68 eingelegt.

Die Prüfung des Drehmomentschlüssels 26 erfolgt durch Betätigen der Kurbel 56 oder des Motors 62. Die dabei auftretende Kraft bewirkt eine Verschiebung der Griffhalterung 36 in der Führungsschiene 70. Der Drehmomentschlüssel 26 wird dabei um die Achse des Messwertaufhehmers 16 geschwenkt. Der Griff 42 bewegt sich im Gegensatz zur linearen Bewegung der Griffhalterung 36 kreisförmig um den Messwertaufnehmer 16 und muss somit beweglich von der Griffhalterung 36 gehalten werden. Durch den Gleitmechanismus 68, der sich zwischen den Zapfen 38, 38a in horizontaler und vertikaler Ausrichtung erstreckt, kann die Bewegung des Griffes 42 nahezu reibungslos in Richtung der Zapfen 38, 38a erfolgen. Die eingesetzte Kraft der Kurbel 56 erzeugt ein Drehmoment auf das am Messwertaufhehmer 16 fixierte Kopfstück 24. Gleichzeitig wird das aufgebrachte Drehmoment von dem Messwertaufhehmer 16 gemessen und nach einer Verarbeitung durch die Signalverarbeitungseinrichtung 28 auf der Anzeige 30 dargestellt.

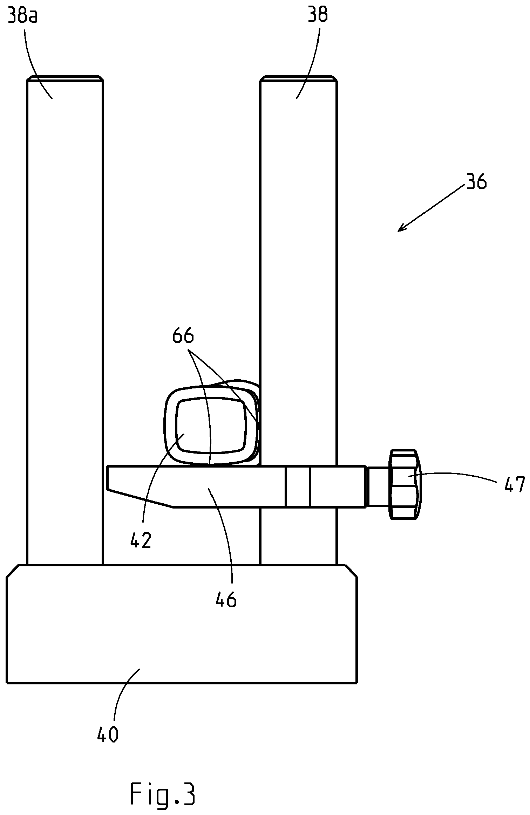

Fig. 3 zeigt eine erste Detailansicht der Griffhalterung 36 bei Betätigungsvorrichtungen 10, 110, wie sie oben beschrieben wurden. Der Messwertaufhehmer 16 ist an dem Träger 12, 112 befestigt und die Griffhalterung 36 ist entweder fest (Fig. 1) oder auf der Führungsschiene 70 beweglich (Fig. 2) mit dem Träger 12,112 verbunden. Die Auflage 46 der Griffhalterung 36 besteht in der Regel aus Stahlblech. Der Griff 42 des Drehmomentschlüssels 26 liegt dabei lose auf der Auflage 46 zwischen den Zapfen 38, 38a. Bei einer Messung erfährt der Drehmomentschlüssel 26 ein Drehmoment auf den Griff 42, dabei können kleine ruckende Bewegungen des Griffes 42 zu fehlerhaften Messungen führen. Insbesondere weiche Kunststoffzonen 66, die die meisten Griffe 42 der Drehmomentschlüssel 26 aufweisen, haben eine starke Haftung an die Auflage 46 und verstärken die ruckenden Bewegungen der Griffe 42 während der Messung. Die ruckenden Bewegungen treten sporadisch auf und können die Messergebnisse erheblich beeinflussen. Die Reproduzierbarkeit der Resultate ist bei diesen Griffauflagen nicht gewährleistet. Dies gilt insbesondere für sehr kleine Prüfdrehmomente, so dass Ergebnisse von Drehmomentschlüssel 26 durch die Reibung von Griff 42 und Auflage 46 schon außerhalb der geforderten Genauigkeit liegen können.

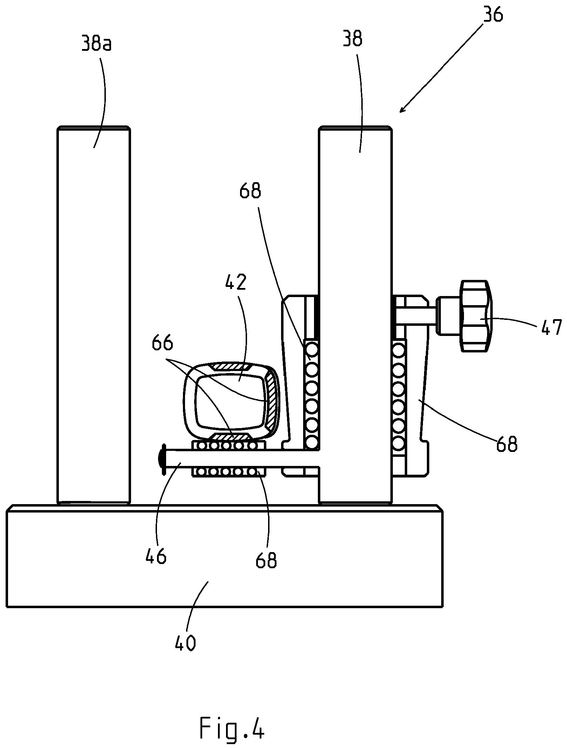

Fig. 4 zeigt eine Detailansicht der Griffhalterung 36 mit dem erfindungsgemäßen Gleitmechanismus 68. Der Griff 42 des Drehmomentschlüssels 26 besitzt meist weiche Kunststoffzonen 66 und liegt lose auf dem reibungsarmen Gleitmechanismus 68. Der Gleitmechanismus 68 erstreckt sich sowohl horizontal zwischen den Zapfen 38 und 38a, als auch vertikal an den Zapfen 38, 38a. Der Gleitmechanismus 68 kann in unterschiedlichen Ausprägungen ausgebildet sein. Entweder als Gleitkörper, welcher auf einer Gleitführung geführt wird oder als Kugel- bzw. Rollenlagerung, die ein Gleiten der Griffe 42 mit vernachlässigender Reibung gewährleistet. Weiterhin sind gleitende Hülsen oder Gleitschienen vorstellbar, auf denen sich die Drehmomentgriffe 42 während der Messung reibungsarm bewegen können. Bei einer Messung mit der Bestätigungsvorrichtung 10, 110 erfährt der Griff 42 des Drehmomentschlüssels 26 eine Kraft in Richtung der Zapfen 38, 38a. Durch die lose Lagerung der Drehmomentgriffe 42 treten bei herkömmlichen, ohne Gleitmechanismus ausgestatteten Betätigungsvorrichtungen, während der Messung ruckenden Bewegungen auf, die nun durch den neuartigen Gleitmechanismus 68 eliminiert werden. Die Kalibrierung der Drehmomentschlüssel 26 kann exakt durchgeführt werden.

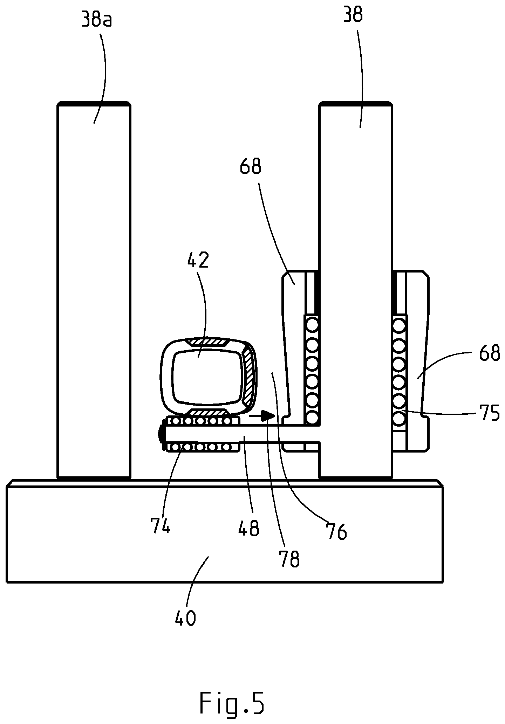

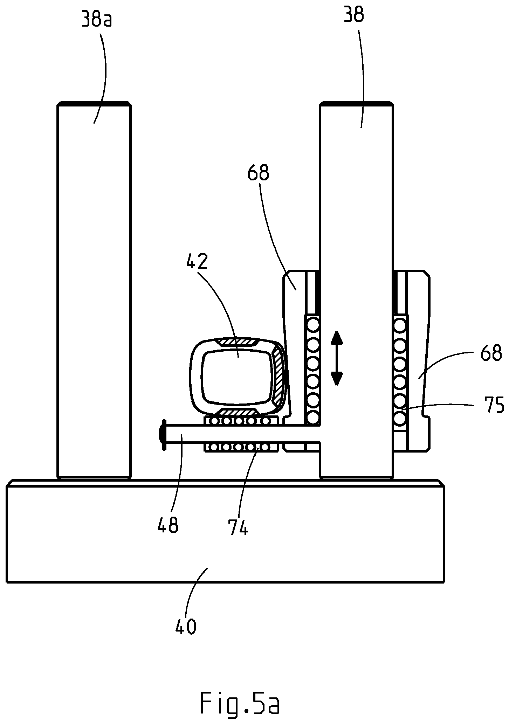

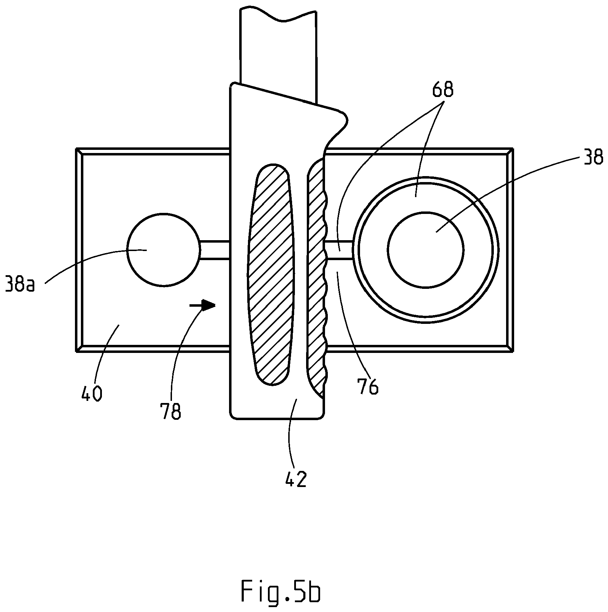

Fig. 5 und Fig. 5a zeigen ein Ausführungsbeispiel der Griffhalterung 36 mit dem Gleitmechanismus 68 in einer Detailansicht (Hintere Ansicht). Der Gleitmechanismus 68 ist in Form einer Kugelhülse dargestellt und erstreckt sich zwischen den Zapfen 38, 38a in horizontaler und vertikaler Ausrichtung. Fig. 5 zeigt die Lagerung des Griffs 42 in der Griffhalterung 36 zu Beginn der Messung. Die Griffhalterung 36 besteht aus einem horizontalen Stift 48 und den zwei an den Enden des Stiftes 48 angeordneten Zapfen 38, 38a. Der Stift 48 weist eine Hülse 74 auf, die die Auflagefläche für den Griff 42 in der Griffhalterung 36 bildet. Eine weitere Hülse 75 umschließt die Zapfen 38, 38a und ermöglicht einen senkrechten Höhenausgleich des Drehmomentschlüssels 26. Dies ist wichtig, um Querkräfte am Messwertaufnehmer 16 und dadurch verursachte Messfehler zu verhindern. Die Zapfen 38 bzw. 38a bilden wiederum den Anschlag für den Griff 42 in der Griffhalterung 36. Deutlich ist ein Spalt 76 zwischen Griff 42 und Zapfen 38 zu erkennen. Während der Messung wird der Griff 42 des Drehmomentschlüssels 26 beispielsweise in Richtung Zapfen 38 bewegt, Pfeil 78. Die dabei auftretenden Reibungskräfte werden durch die weitestgehend reibungslos gleitende Hülse 74 aufgehoben. Die ohne Gleitmechanismus ausgestatteten Betätigungsvorrichtungen zeigen bei einer Messung der Drehmomentschlüssel ruckende Bewegungen, die das Ergebnis verfälschen. Der erfindungsgemäße Gleitmechanismus 68 ermöglicht nun ein reibungsloses Gleiten der Griffe über die Auflage, so dass exakte Messungen mit den Drehmomentschlüsseln 26 durchführbar sind.

Fig. 5b zeigt eine Detailansicht der Griffhalterung 36 von oben. Deutlich ist ein Spalt 76 zwischen Griff 42 und Zapfen 38 bzw. 38a zu erkennen. Eine erfindungsgemäße Gleitvorrichtung 68 umfasst sowohl die Auflagefläche 46, als auch die Zapfen 38, 38a. Bei einer Prüfung der Drehmomentschlüssel 26 muss der Spalt 76 zwischen Drehmomentgriff 42 und Zapfen 38, 38a möglichst reibungsarm überwunden werden. Dies wird durch den Gleitmechanismus 68 gewährleistet. Der Gleitmechanismus 68 kann dabei in Form von Kugel- bzw. Rollenlagerungen 80 oder als schlittenartige Gleitschiene 84 oder als hülsenartiger Gleitkörper 82 ausgebildet sein. Je nach Ausgestaltung der Betätigungsvorrichtungen 10, 110 ist auch eine Kombination genannter Ausführungsformen möglich.

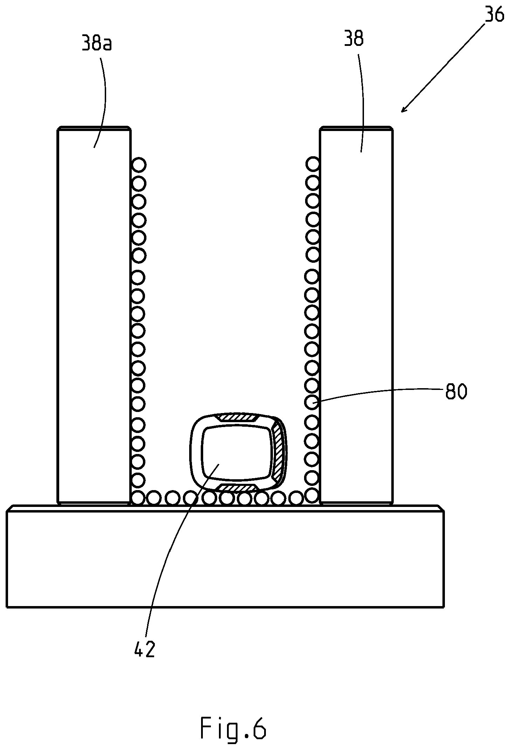

Fig. 6 zeigt in einer Detailansicht eine Ausbildung des Gleitmechanismus 68 in Form einer Kugel-, bzw. Rollenlagerung 80, die die Griffhalterung 36 sowohl horizontal, als auch vertikal auskleidet. Der Griff 42 des Drehmomentschlüssels 26 liegt lose auf der Kugel- bzw. Rollenlagerung 80 und ist bei der Messung des Drehmomentes frei und reibungslos bewegbar. Auftretende Querkräfte, die bei herkömmlichen Griffhalterungen ohne Gleitmechanismus auftreten, werden bei dieser Ausführung vermieden.

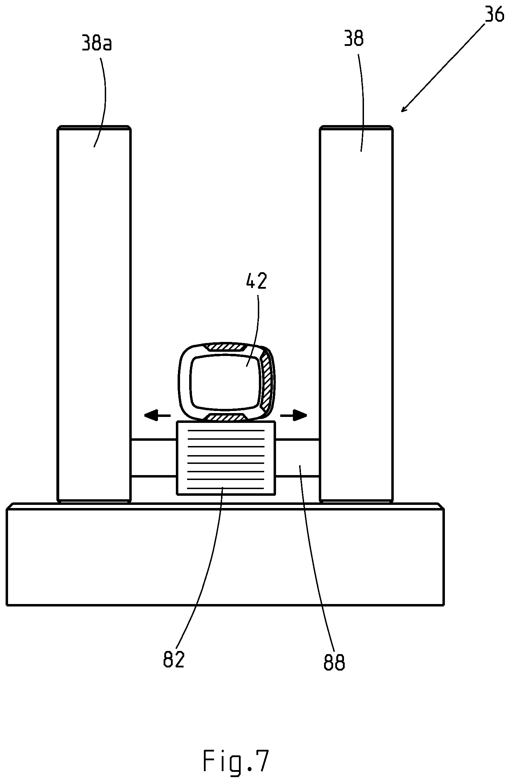

Fig. 7 zeigt in einer Detailansicht eine Ausbildung des Gleitmechanismus 68 in Form einer gleitenden Hülse 82, diese umschließt eine als Gleitführung ausgebildete Führungsfläche 88. Die Hülse 82 bildet für den Griff 42 des Drehmomentschlüssels 26 die Auflagefläche und kann so ausgebildet sein, dass sie mit einem besonders ausgeprägten Gleitmittel, beispielsweise ein Schmierfett, auf der Führungsfläche 88 läuft. Diese Hülse 82 bewegt sich immer mit der gleichen Reibung auf der Führungsfläche 88. Dadurch werden Reibungskräfte am Messwertaufnehmer 16 während eines Prüfvorgangs konstant gehalten. Mit Hilfe der Hülse 82 werden Messfehler, verursacht durch ruckende Bewegung des Griffs auf einer starren Auflagefläche, durch vorliegende Ausführung weitestgehend kompensiert. Die Prüfung eines Drehmomentschlüssels 26 wird durch diese Ausgestaltung optimiert.

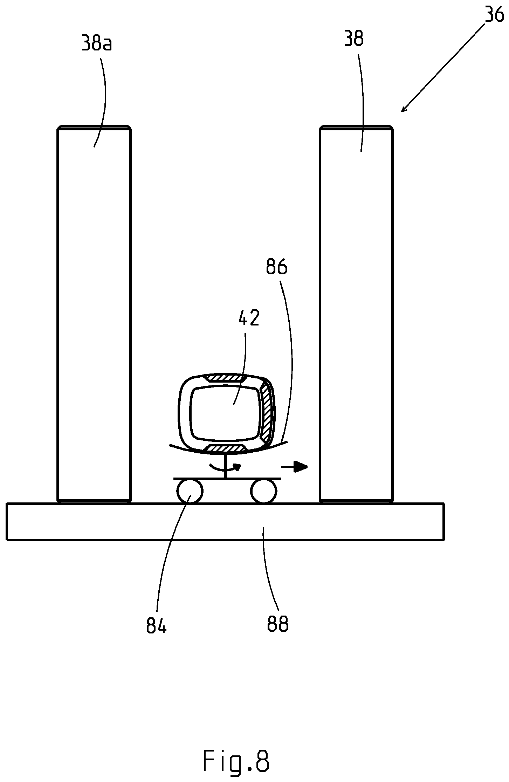

Fig. 8 zeigt in einer Detailansicht eine Ausbildung des Gleitmechanismus 68 in Form eines Gleitschlittens 84, der auf einer Führungsfläche 88 gelagert ist und mit einer frei rotierbaren, tellerförmigen Auflagefläche 86 versehen ist. Zu Beginn einer Messung wird der Griff 42 des Drehmomentschlüssels auf den Teller 86 fixiert, der frei beweglich zum Gleitschlittens 84 ist. Dadurch ist ein exaktes Ausrichten des Griffes 42 zum Messwertaufnehmer 16 gewährleistet. Während der Messung kann der Gleitschlitten 84 in der entsprechenden Führungsfläche 88 reibungsarm gleiten. Der Gleitschlitten 84 kann beispielsweise Rollen oder Kugeln aufweisen, mit denen er reibungsarm bewegbar ist. Der Gleitschlitten 84 kann praktisch auf jeder Auflagefläche 46 von jeder Griffhalterung 36 eingesetzt werden und eignet sich in dieser Ausgestaltung besonders zum Nachrüsten von herkömmlichen Betätigungsvorrichtungen.

**Bezugszeichenliste**

| | | | |
|---|---|---|---|
| 10, 110 | Betätigungsvorrichtung | 12,112 | Träger |
| 14 | Standfuß | 16 | Messwertaufnehmer |
| 18 | Drehzapfen | 20 | Lagerung |
| 22 | Aufnahme | 24 | Kopf eines Drehmomentschlüssels |
| 26 | Drehmomentschlüssel | 28 | Signalverarbeitungseinrichtung |
| 30 | Anzeige | 32 | Speicher |
| 34 | Schnittstelle | 36 | Griffhalterung |
| 38,38a | Zapfen | 40 | Brücke |
| 42 | Griff des Drehmomentschlüssels | 44 | Hülse |
| 46 | Auflage | 47 | Klemmschraube |
| 48 | Stift | 50 | Arretiermittel |
| 52 | Auslenkhebel | 54 | Spindelvorrichtung |
| 56 | Kurbel | 58 | Spindel |
| 60 | Mitnehmer | 62 | Motor |
| 66 | Kunststoffzonen | 68 | Gleitmechanismus |
| 70 | Führungsschiene | 72 | Rinne |
| 74 | Hülse | 75 | Hülse |
| 76 | Spalt | 78 | Pfeil |
| 80 | Kugel-bzw. Rollenlagerung | 82 | gleitende Hülse |
| 84 | Gleitschlitten | 86 | tellerförmige Auflage |
| 88 | Führungsfläche | | |

## Patentansprüche

1. Betätigungsvorrichtung (10, 110) zum Prüfen von Drehmomentschlüsseln (26), enthaltend
a) einen Träger (12, 112), zur Fixierung eines zu prüfenden Drehmomentschlüssels (26),
b) einen an dem Träger (12, 112) angeordneten Messwertaufhehmer (16), welcher mit dem Kopfstück (24) des zu prüfenden Drehmomentschlüssels (26) gekoppelt wird,
c) eine auf dem Träger (12, 112) angeordnete Griffhaiterung (36) zur Fixierung des Griffs (42) des zu prüfenden Drehmomentschlüssels (26),
d) einen Auslenkmechanismus (52, 70) zum Erzeugen eines Drehmoments auf das Kopfstück (24) des zu prüfenden Drehmomentschlüssels (26),
e) einen Gleitmechanismus (68) für ein *reibungsarmes* Gleiten des Griffs (42) in der Griffhalterung (36), wobei
f) der Gleitmechanismus (68) einen als Auflage (46, 86) ausgebildeten, schlittenartigen Gleitkörper (84) aufweist, welcher auf einer Führungsfläche (88) als Gleitführung geführt ist,
**dadurch gekennzeichnet, dass**
g) ein horizontaler Gleitmechanismus (68) für ein reibungsarmes horizontales Gleiten des Griffs (42) in der Griffhalterung (36) und
h) ein vertikaler Gleitmechanismus (68) für ein reibungsarmes vertikales Gleiten des Griffs (42) in der Griffhalterung (36) vorgesehen sind.

2. Betätigungsvorrichtung (10, 110) zum Prüfen von Drehmomentschlüsseln (26) nach Anspruch 1, **dadurch gekennzeichnet, dass** der Gleitmechanismus (68) eine Kugel- bzw. Rollenlagerung (80) aufweist.

3. Betätigungsvorrichtung (10, 110) zum Prüfen von Drehmomentschlüsseln (26) nach einem der Ansprüche 1 oder 2, **dadurch gekennzeichnet, dass** der Auslenkmechanismus (52, 70) eine Vorrichtung zum Auslenken des Drehmomentschlüssels (26) aufweist.

4. Betätigungsvorrichtung (10, 110) zum Prüfen von Drehmomentschlüsseln (26) nach einem der Anspräche 1 bis 3, **dadurch gekennzeichnet, dass** der Auslenkmechanismus (52, 70) als Auslenkhebel (52) ausgebildet ist, der auf das Kopfstück (24) des zu prüfenden Drehmomentschlüssels (26) wirkt, wobei der Träger (12, 112) gegenüber dem Auslenkhebel statisch vorgesehen ist.

5. Betätigungsvorrichtung zum Prüfen von Drehmomentschlüsseln (26) nach einem der Ansprüche 1 bis 4, **gekennzeichnet durch** eine Spindelvorrichtung (54), welche an dem Träger (12, 112) angeordnet ist, wobei ein auf einer Spindel (58) der Spindelvorrichtung (54) angeordneter Mitnehmer (60) bei Betätigung der drehbar gelagerten Spindel (58) den Auslenkhebel (52) oder den Drehmomentschlüssel (26) auslenkt.

6. Betätigungsvorrichtung (10, 112) zum Prüfen von Drehmomentschlüsseln (26) nach Anspruch 5, **dadurch gekennzeichnet, dass** die Spindel (58) der Spindelvorrichtung (54) über einen Motor (62), antreibbar ausgebildet ist

7. Betätigungsvorrichtung (10, 112) zum Prüfen von Drehmomentschlüsseln (26) nach Anspruch 6, **dadurch gekennzeichnet, dass** die Spindel (58) der Spindelvorrichtung (54) über einen Elektromotor antreibbar ausgebildet ist.

8. Betätigungsvorrichtung zum Prüfen von Drehmomentschlüsseln (26) nach einem der Ansprüche 1 bis 7, **gekennzeichnet durch** eine auf dem Träger (12, 112) in Längsrichtung des zu fixierenden Drehmomentschlüssels (26) verstellbar angeordnete Griffhalterung (36) für Drehmomentschlüssel (26) unterschiedlicher Länge.

9. Betätigungsvorrichtung (10, 110) zum Prüfen von Drehmomentschlüsseln (26) nach einem der Ansprüche 1 bis 8, **dadurch gekennzeichnet, dass** eine Signalverarbeitungseinrichtung (28) vorgesehen ist, welche die Messsignale des Messwertaufiiehmers (16) verarbeitet

10. Betätigungsvorrichtung (10, 110) zum Prüfen von Drehmomentschlüsseln (26) nach Anspruch 1 bis 9, **dadurch gekennzeichnet, dass** eine Signalverarbeitungseinrichtung (28) vorgesehen ist, welche die Messsignale des Messwertaufnehmers (16) digitalisiert, in einem Speicher (32) speichert und auf einer Anzeige (30) anzeigt,

11. Betätigungsvorrichtung zum Prüfen von Drehmomentschlüsseln (26) nach einem der Ansprüche 1 bis 10, **dadurch gekennzeichnet, dass** der Träger (12, 112) verlängerbar ausgebildet ist.

## Claims

1. Actuating device (10, 110) for testing torque wrenches (26), comprising
a) a carrier (12, 112) for fixing a torque wrench (26) to be tested,
b) a measurement transducer (16) arranged on the carrier (12, 112) which is coupled with the headpiece (24) of the torque wrench (26) to be tested,
c) a grip holder (36) arranged on the carrier (12, 112) to hold the grip (42) of the torque wrench (26) to be tested,
d) a deflection mechanism (52, 70) to create a torque on the headpiece (24) of the torque wrench (26) to be tested,
e) a sliding mechanism (68) for low-friction sliding of the grip (42) into the grip holder (36), wherein
f) the sliding mechanism (68) is formed as a support (46, 86) having a skid-like sliding body (84), which is guided on a guide surface (88) as a sliding guide,
**characterized in that**
g) a horizontal sliding mechanism (68) for low-friction horizontal sliding of the grip (42) into the grip holder (36), and
h) a vertical sliding mechanism (68) for low-friction vertical sliding of the grip (42) into the grip holder (36) are provided.

2. Actuating device (10, 110) for testing torque wrenches (26) according to Claim 1, **characterised in that** the sliding mechanism (68) is provided with a ball or roller bearing (80).

3. Actuating device (10, 110) for testing torque wrenches (26) according to one of Claims 1 or 2, **characterized in that** the deflection mechanism (52, 70) is provided with a device for deflecting the torque wrench (26).

4. Actuating device (10, 110) for testing torque wrenches (26) according to one of Claims 1 to 3, **characterized in that** the deflection mechanism (52, 70) is formed as a deflection lever (52), which acts on the headpiece (24) of the torque wrench (26) to be tested, whereby the carrier (12, 112) is static with respect to the deflection lever.

5. Actuating device for testing torque wrenches (26) according to one of Claims 1 to 4, **characterized by** a spindle device (54) arranged on the carrier (12,112), whereby a driver (60) arranged on one spindle (58) of the spindle device (54) deflects the deflection lever (52) or the torque wrench (26) when the rotatably mounted spindle (58) is activated.

6. Actuating device (10, 112) for testing torque wrenches (26) according to Claim 5, **characterized in that** the spindle (58) of the spindle device (54) is designed to be driven by a motor (62).

7. Actuating device (10, 112) for testing torque wrenches (26) according to Claim 6, **characterized in that** the spindle (58) of the spindle device (54) is designed to be driven by an electric motor (62).

8. Actuating device (10, 112) for testing torque wrenches (26) according to one of Claims 1 to 7, **characterized by** a grip holder (36) adjustably arranged on the carrier (12, 112) in the longitudinal direction of the torque wrench (26) to be fixed for mounting torque wrenches (26) of different lengths.

9. Actuating device (10, 112) for testing torque wrenches (26) according to one of Claims 1 to 8, **characterized in that** a signal processing device (28) is provided which processes the measurement signals of the measuring transducer (16).

10. Actuating device (10, 112) for testing torque wrenches (26) according to one of Claims 1 to 9, **characterized in that** a signal processing device (28) is provided which digitizes, stores, and displays on a display the measurement signals of the measuring transducer (16).

11. Actuating device (10, 112) for testing torque wrenches (26) according to one of Claims 1 to 10, **characterized in that** the carrier (12, 112) is extendable.

## Revendications

1. Dispositif d'actionnement (10, 110) destiné à vérifier des clés dynamométriques (26), comprenant
(a) un support (12, 112) destiné à fixer une clé dynamométrique (26) à vérifier,
(b) un capteur de valeur de mesure (16) disposé sur le support (12, 112) qui est couplé à la tête (24) de 1 clé dynamométrique (26) à vérifier,
(c) une fixation pour poignée (36) disposée sur le support (12, 112) et destinée à fixer la poignée (42) de la clé dynamométrique (26) à vérifier,
(d) un mécanisme de déviation (52, 70) destiné à générer un couple de rotation sur la tête (24) de la clé dynamométrique (26) à vérifier,
(e) un mécanisme de glissement; (68) pour un glissement presque sans frottement de la poignée (42) dans la fixation pour poignée (36),
(f) le mécanisme de glissement (68) présentent un corps de glissement (84) en forme de chariot configuré sous forme d'appui (46, 86) qui est guidé sur une surface de guidage (88) sous forme de glissière,
**caractérisé en ce que**
(g) il est prévu un mécanisme de glissement horizontal (68) pour un glissement horizontal presque sans frottement de la poignée (42) dans la fixation pour poignée (36) et
(h) un mécanisme de glissement vertical (68) pour un glissement vertical presque sans frottement de la poignée (42) dans la fixation pour poignée (36),

2. Dispositif d'actionnement (10, 110) destiné à vérifier des clés dynamométriques (26) selon la revendication 1, **caractérisé en ce que** le mécanisme de glissement (68) présente un roulement à billes ou à rouleaux (80).

3. Dispositif d'actionnement (10, 110) destiné à vérifier des clés dynamométriques (26) selon l'une quelconque des revendications 1 ou 2, **caractérisé en ce que** le mécanisme de déviation (52, 70) présente un dispositif destiné à faire dévier la clé dynamométrique (26).

4. Dispositif d'actionnement (10, 110) destiné à vérifier des clés dynamométriques (26) selon l'une quelconque des revendications 1 à 3, **caractérisé en ce que** le mécanisme de déviation (52, 70) est configuré sous forme de levier de déviation (52) agissant sur la tête (24) de la clé dynamométrique (26) à vérifier, le support (12, 112) étant prévu de manière statique par rapport au levier de déviation,

5. Dispositif d'actionnement destiné à vérifier des clés dynamométriques (26) selon l'une quelconque des revendications 1 à 4, **caractérisé par** un dispositif à broche (54) disposé sur le support (12, 112), un toc d'entraînement (60) disposé sur une broche (58) du dispositif à broche (54) fait dévier le levier de déviation (52) ou la clé dynamométrique (26) lors de l'actionnement de la broche (58) logée de manière à pouvoir tourner.

6. Dispositif d'actionnement (10, 112) destiné à vérifier des clés dynamométriques (26) selon la revendication 5, **caractérisé en ce que** la broche (58) du dispositif à broche (54) est configurée de manière à pouvoir être entraînée par un moteur (62).

7. Dispositif d'actionnement (10, 112) destiné à vérifier des clés dynamométriques (26) selon la revendication 6, **caractérisé en ce que** la broche (58) du dispositif à broche (54) est configurée de manière à pouvoir être entraînée par un moteur électrique.

8. Dispositif d'actionnement destiné à vérifier des clés dynamométriques (26) selon l'une quelconque des revendications 1 à 7, **caractérisé par** une fixation pour poignée (36) pour clés dynamométriques (26) de différentes longueurs disposée sur le support (12, 112) de manière à pouvoir se déplacer dans le sens longitudinal de la clé dynamométrique (26) à fixer.

9. Dispositif d'actionnement (10, 110) destiné à vérifier des clés dynamométriques (26) selon l'une quelconque des revendications 1 à 8, **caractérisé en ce qu'**il est prévu un dispositif de traitement de signaux (28) qui traite les signaux de mesure du capteur de valeur de mesure (16).

10. Dispositif d'actionnèrent (10, 110) destiné à vérifier des clés dynamométriques (26) selon l'une quelconque des revendications 1 à 9, **caractérisé en ce qu'**il est prévu un dispositif de traitement de signaux (28) qui numérise les signaux de mesure du capteur de valeur de mesure (16), les sauvegarde dans une mémoire (32) et les affiche sur un dispositif d'affichage (30).

11. Dispositif d'actionnèrent destiné à vérifier des clés dynamométriques (26) selon l'une quelconque des revendications 1 à 10, **caractérisa en ce que** le support (12, 112) est configuré de manière à pouvoir se rallonger.
